# EUROPÄISCHE PATENTANMELDUNG

(11) **EP 2 961 052 A1**
(43) Veröffentlichungstag der Anmeldung: **30.12.2015**
(21) Anmeldenummer: 14173908.6
(22) Anmeldetag: 25.06.2014
(51) Int. Cl.: H02M 3/28

(54) **Schaltnetzteil mit Web-Schnittstelle**

(71) Anmelder: Siemens Aktiengesellschaft, 80333 München (DE)
(72) Erfinder: Benesch, Karl, 3340 Waidhofen/Ybbs (AT); Vucic, Miroslav, 1090 Wien (AT)
(74) Vertreter: Maier, Daniel Oliver

(57) **Zusammenfassung**

Die Erfindung betrifft ein Schaltnetzteil (1) mit mehreren Ausgangskanälen (3, 4, 5, 6) und einer Web-Schnittstelle (8) zur Anbindung an ein Kommunikationsnetzwerk (10), wobei das Schaltnetzteil (1) einen sogenannten Real-Time-Ethernet-Controller (9) umfasst, welcher mit einer Steuerung (7) des Schaltnetzteils (1) verbunden und als Web-Server eingerichtet ist, sodass über die Web-Schnittstelle (8) mehrere Betriebsparameter des Schaltnetzteils (1) in Echtzeit einstellbar und/oder anzeigbar sind. Auf diese Weise ist das Schaltnetzteil (1) über das Kommunikationsnetzwerk (10) konfigurier und überwachbar, wobei sichergestellt ist, dass Änderungen der Konfiguration sofort wirksam werden.

## Beschreibung

Die Erfindung betrifft ein Schaltnetzteil mit mehreren Ausgangskanälen und einer Web-Schnittstelle zur Anbindung an ein Kommunikationsnetzwerk, sowie ein Verfahren zum Betreiben des Schaltnetzteils.

Schaltnetzteile mit mehreren Ausgangskanälen werden genutzt, um gleichzeitig unterschiedliche Verbraucher zu versorgen. Oftmals ist dabei jeder Ausgangskanal mittels eines Potentiometers oder eines DIP-Schalters separat einstellbar.

Aus der US 2010/0039043 A1 ist ein Schaltnetzteil mit mehreren Ausgangskanälen bekannt, das eine Web-Schnittstelle zur Anbindung an ein Kommunikationsnetzwerk umfasst. Über diese Web-Schnittstelle können für jeden Ausgangskanal Einstellungen vorgenommen werden. Konkret wird mit dem beschriebenen Schaltnetzteil ein Lichtsystem versorgt, wobei mittels Web-Schnittstelle verschiedene Beleuchtungsszenarien festlegbar sind.

Bei Industrieanwendungen im Automatisierungsbereich werden an Schaltnetzteile besondere Anforderungen gestellt. Beispielsweise ist eine flexible Konfigurierung erforderlich, um auch nach Umbauten einer Industrieanlage eine zuverlässige Versorgung mit Strom sicherzustellen.

Auch die Ausfallsicherheit spielt in Industrieanwendungen eine besondere Rolle. So ist es oftmals erforderlich, auf Störungen rasch zu reagieren, um innerhalb einer Anlage Folgeschäden zu vermeiden. Fehler müssen dabei frühzeitig erkannt werden.

Es liegt der Erfindung deshalb die Aufgabe zugrunde, für ein Schaltnetzteil der eingangs genannten Art eine Verbesserung gegenüber dem Stand der Technik anzugeben, insbesondere für den Einsatz in Industrieanlagen.

Erfindungsgemäß wird diese Aufgabe gelöst durch ein Schaltnetzteil gemäß Anspruch 1 und ein Verfahren gemäß Anspruch 14. Verbesserungen sind abhängigen Ansprüchen entnehmbar.

Dabei umfasst das Schaltnetzteil einen sogenannten Real-Time-Ethernet-Controller, welcher mit einer Steuerung des Schaltnetzteils verbunden und als Web-Server eingerichtet ist, sodass über die Web-Schnittstelle mehrere Betriebsparameter des Schaltnetzteils in Echtzeit einstellbar und/oder anzeigbar sind. Auf diese Weise ist das Schaltnetzteil über das Kommunikationsnetzwerk konfigurier und überwachbar, wobei sichergestellt ist, dass Änderungen der Konfiguration sofort wirksam werden. Zudem werden Fehler ohne Verzögerung an eine zentrale Stelle gemeldet, um notwendige Maßnahmen vorzunehmen. Eine solche Maßnahme kann beispielsweise die gezielte Abschaltung von Anlagenkomponenten sein, um Folgeschäden zu vermeiden. Da der Real-Time-Ethernet-Controller als Web-Server eingerichtet ist, erfolgt die Kommunikation mit dem Schaltnetzteil mittels eines Web-Browsers. Installiert ist der Web-Browser zum Beispiel in einem Computer, der an das Kommunikationsnetzwerk angeschlossen ist. Dieser Computer bildet die zentrale Stelle, von der aus ein erfindungsgemäßes Schaltnetzteil oder mehrere erfindungsgemäße Schaltnetzteile konfigurierbar und überwachbar ist/sind. Außer dem Web-Browser ist keine weitere Software erforderlich, um diese Funktion zu erfüllen.

Eine Weiterbildung der Erfindung sieht vor, dass der Real-Time-Ethernet-Controller zur Datenübertragung mit Taktsynchronität eingerichtet ist. Bei einer solchen synchronisierten Kommunikation (Real-Time Class 3) erfolgt das Senden der Prozessdaten nach einer genauen, beim Anlagen-Engineering festgelegten, Reihenfolge mit höchster Präzision (maximal erlaubte Abweichung vom Beginn eines Buszykluss ist 1 µs). Diese optimierte Datenübertragung wird auch als IRT-Funktionalität bezeichnet (Isochronous Real-Time oder Taktsynchronität). Es kommt dabei zu keinen Wartezeiten.

In einer vorteilhaften Ausprägung der Erfindung sind als Betriebsparameter zumindest eine Eingangsspannung und ein Eingangsstrom anzeigbar und für jeden Ausgangskanal eine Ausgangsspannung und ein Stromlimit einstellbar und/oder anzeigbar. Über die Web-Schnittstelle ist ein solches Schaltnetzteil flexibel an geänderte Anlagenkomponenten anpassbar. Die Eingangsspannung und der Eingangsstrom ergeben sich dabei durch ein versorgendes Stromnetz, an das das Schaltnetzteil angeschlossen ist und aus den an den Ausgangskanälen angeschlossenen Lasten.

Darüber hinaus ist es von Vorteil, wenn für jeden Ausgangskanal mittels Web-Server einstellbar ist, ob bei Erreichung des Stromlimits eine Abschaltung oder eine Strombegrenzung erfolgt. Auf diese Weise ist die Reaktion auf eine auftretende Störung festlegbar. Bei der Versorgung von kapazitiven Verbrauchern kann eine vorübergenede Strombegrenzung sinnvoll sein, um beim Hochfahren vorhandene Kapazitäten aufzuladen. In anderen Fällen kann eine sofortige Abschaltung notwendig sein, um mittels Schaltnetzteil versorgte Anlagenkomponenten zu schützen.

Eine weitere Verbesserung sieht vor, dass mittels Web-Server für jeden Ausgangskanal eine Einschaltverzögerung einstellbar ist. Damit lässt sich durch Vorgabe unterschiedlicher Einschaltverzögerungen eine Reihenfolge beim Hochfahren mehrerer Anlagenkomponenten festlegen. Das kann sinnvoll sein, um eine Überlastung des Schaltnetzteils zu vermeiden. Durch den Fernzugriff über die Web-Schnittstelle ist eine einfache Möglichkeit gegeben, diesen Konfigurationsvorgang von einer zentralen Stelle aus in mehreren Schritten zu optimieren.

Um bei komplexen Industrieanlagen Fehler schnell erkennen zu können ist es von Vorteil, wenn mittels Web-Server für jeden Ausgangskanal ein Betriebsstatus anzeigbar ist. Auf diese Weise ist sichergestellt, dass an zentraler Stelle jede versorgte Anlagenkomponente überwacht wird. Veränderungen des Betriebsstatus eines Kanals oder mehrerer Kanäle sind sofort auswertbar, um entsprechende Maßnahmen abzuleiten.

Zur zentralen Überwachung der eingangsseitigen Anschlüsse ist es vorteilhaft, wenn mittels Web-Server eine Geräteüberlast und/oder ein Phasenausfall anzeigbar sind/ist.

Der Funktionsumfang des Schaltnetzteils wird in günstiger Weise dadurch erhöht, dass jeder Ausgangskanal mittels Web-Server separat aus- und einschaltbar ist. Die Kanäle des Schaltnetzteils sind dann über die Web-Schnittstelle von zentraler Stelle aus als Schalter zum Ein- und Ausschalten von Anlagenkomponenten nutzbar.

Im Speziellen ist es günstig, wenn jeder Ausgangskanal nach einer Überlastabschaltung mittels Web-Server wieder einschaltbar ist. Nach einer Fehleranalyse anhand zentral ausgewerteter Daten und gegebenenfalls einem Austausch einer fehlerhaften Anlagenkomponente kann auf diese Weise der entsprechende Ausgangskanal sofort wieder aktiviert werden.

In einer Weiterbildung der Erfindung ist vorgesehen, dass das Schaltnetzteil ein Erweiterungsmodul umfasst und dass zumindest ein Parameter des Erweiterungsmoduls mittels Web-Server einstellbar und/oder anzeigbar ist.

Dabei ist es günstig, wenn das Erweiterungsmodul ein Puffermodul zur Überbrückung einer Versorgungsunterbrechung ist und wenn mittels Web-Server eine Pufferzeit einstellbar und/oder anzeigbar ist. Im einfachsten Fall wird dabei einem Ausgangskanal eine verlängerte Pufferzeit vorgegeben, wobei sich automatisch die Pufferzeiten für die restlichen Kanäle entsprechend verkürzen.

Eine andere günstige Variante besteht darin, dass das Erweiterungsmodul einen zusätzlichen Ausgangskanal zur Versorgung einer weiteren Last umfasst.

All diese Erweiterungsmöglichkeiten sind von zentraler Stelle aus sofort konfigurierbar, wodurch die Nutzungsflexibilität des Schaltnetzteils weiter steigt.

Des Weiteren ist es von Vorteil, wenn mittels Web-Server eine in der Steuerung des Schaltnetzteils eingerichtete Software änderbar ist. Insbesondere bei der Verwendung mehrerer Schaltnetzteile ist es besonders effizient, Softwareupdates von zentraler Stelle aus durchzuführen. Diese Situation ist bei der Versorgung von Industrieanlagen regelmäßig gegeben.

Das erfindungsgemäße Verfahren zum Betreiben des beschriebenen Schaltnetzteils sieht vor, dass mittels Web-Server mehrere Betriebsparameter des Schaltnetzteils in Echtzeit verändert werden und dass die veränderten Betriebsparameter mittels Web-Server angezeigt werden.

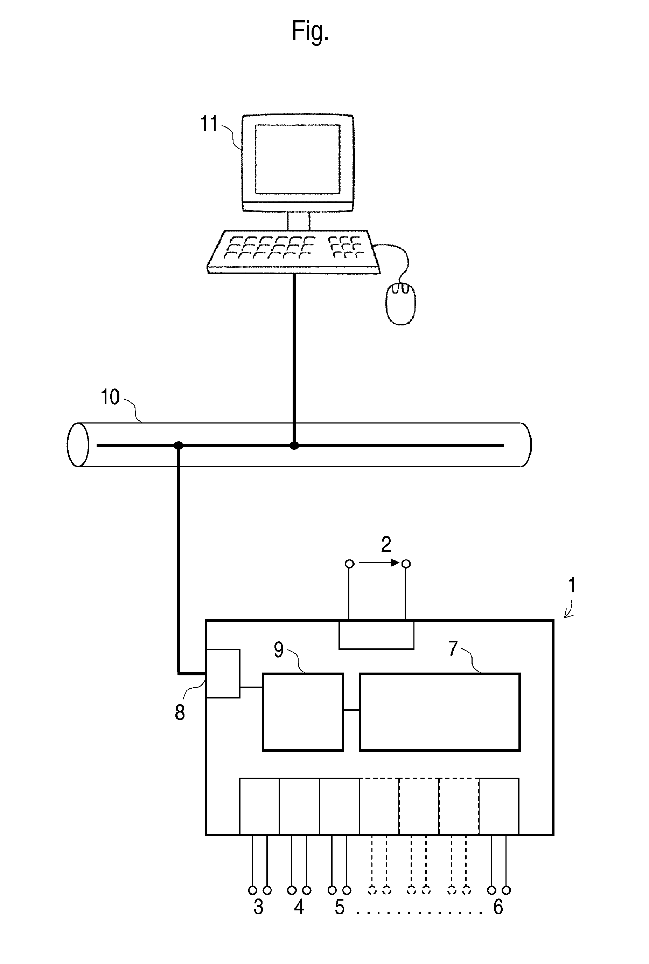

Die Erfindung wird nachfolgend in beispielhafter Weise unter Bezugnahme auf die beigefügte Figur erläutert.

Diese zeigt ein Schaltnetzteil 1, welches an eine Eingangsspannung 2 angeschlossen ist und mehrere Ausgangskanäle 3, 4, 5, 6 aufweist. An jedem Ausgangskanal 3, 4, 5, 6 liegt eine jeweilige Ausgangsspannung an.

Angesteuert ist jeder Ausgangskanal 3, 4, 5, 6 mittels einer Steuerung 7. Die nicht im Detail dargestellte Leistungsschaltung des Schaltnetzteils 1 besteht beispielsweise aus einem eingangsseitigen Gleichrichter, einem Zwischenkreis und mehreren Wandlern. Beispielsweise sind an den Zwischenkreis mehrere Resonanzwandler angeschlossen, deren Leistungsschalter mittels der Steuerung 7 angesteuert sind.

Durch ein getaktetes Ein- und Ausschalten der Leistungsschalter wird eine Zwischenkreisspannung in eine am jeweiligen Ausgangskanal anliegende Ausgangsspannung umgewandelt. In der Steuerung 7 sind zu diesem Zweck entsprechende Regelungsalgorithmen eingerichtet. Die einzelnen Ausgangsspannungen können dabei unterschiedlich oder gleich groß sein. Zudem besteht die Möglichkeit, zwei oder mehrere Kanäle 3, 4, 5, 6 parallel zu schalten, um eine höhere Ausgangsleistung bereitzustellen.

Um für jeden Ausgangskanal 3, 4, 5, 6 die gewünschte Ausgangsspannung einzustellen, sind voreilhafterweise am Gerät selbst geeignete Bedienelemente vorhanden. Im einfachsten Fall ist das eine Stellschraube.

Weitere Einstellmöglichkeiten betreffen eine Strombegrenzung für jeden Kanal 3, 4, 5, 6, wobei diese auch zweistufig eingerichtet sein kann. Für jeden Ausgangskanal 3, 4, 5, 6 sind dann zwei Stromgrenzwerte vorgegeben. Beim Erreichen des ersten Stromgrenzwertes ist für eine vorgegebene Zeitspanne ein Betrieb im Überlastbereich möglich, beispielsweise um ausgangsseitige Kapazitäten aufzuladen. Erst beim Erreichen eines zweiten Stromgrenzwertes wird der Strom begrenzt. Dabei ist es sinnvoll, wenn der jeweilige Ausgangskanal 3, 4, 5, 6 nach einer einstellbaren Begrenzungszeit abschaltet.

Zum Einstellen der Stromgrenzwerte und der Zeitspannen können ebenfalls Bedienelemente am Gerät selbst angeordnet sein.

Bei gattungsgemäßen Schaltnetzteilen mit mehreren Ausgangsgeräten ist es jedoch weitaus vorteilhafter, diese Konfigurierungsschritte über eine Web-Schnittstelle 8 vorzunehmen. Das gilt insbesondere für den Fall, das mehrere Schaltnetzteile 1 innerhalb einer Industrieanlage zu konfigurieren sind.

Erfindungsgemäß ist deshalb ein Real-Time-Ethernet-Controller 9 vorgesehen, der einerseits mit der Steuerung 7 und andererseits mit einer Web-Schnittstelle 8 verbunden ist. Dabei ist der Real-Time-Ethernet-Controller 9 als Web-Server eingerichtet. Auf diese Weise ist sichergestellt, dass die Einstellungen der Ausgangsspannungen und der Stromwerte bzw. Zeitspannen in Echtzeit über ein Kommunikationsnetzwerk 10 mittels eines Computers 11, auf dem ein Web-Browser installiert ist, vorgenommen werden können. Dabei ist es wichtig, dass vorgenommene Änderungen auch in Echtzeit in einer Ansicht des Web-Browsers angezeigt werden.

Der Real-Time-Ethernet-Controller 9 ist deshalb günstigerweise zur Datenübertragung mit Taktsynchronität eingerichtet. Ein dafür geeigneter Controller ist beispielsweise der ERTEC 200 der Firma Siemens.

Das Kommunikationsnetzwerk 10 ist beispielsweise ein Ethernet oder ein sogenanntes PROFINET. Letzteres nutzt TCP/IP und IT-Standards, ist Echtzeit-Ethernet-fähig und ermöglicht die Integration zahlreicher Feldbus-Systeme.

Ein wesentlicher Vorteil der Erfindung liegt darin, dass von einer zentralen Stelle aus auf einfache Weise und in Echtzeit komplexe Einstellungen der mehrkanaligen Stromversorgung 1 vorgenommen werden können. Diese Einstellungen sind dann in der Stromversorgung 1 abgespeichert und stehen bei jedem neuen Hochfahren der Stromversorgung 1 sofort zur Verfügung. Durch die Echtzeitübertragung besteht auch die Möglichkeit, Einstellwerte zentral abzuspeichern und beim Hochfahren via Web-Schnittstelle 8 einzulesen.

Weiters liegt ein Vorteil darin, den Status der einzelnen Ausgangskanäle 3, 4, 5, 6 in Echtzeit via Web-Browser darzustellen. Angezeigt werden neben den vorgenommenen Einstellungen auch Fehler- oder Störungsmeldungen wie zum Beispiel eine Überschreitung einer Stromgrenze. Die Echtzeit-Ausgabe ermöglicht dabei eine maschinelle Auswertung, die gegebenenfalls sofort zu entsprechenden Schutzmaßnahmen führen kann, beispielsweise zur Abschaltung mehrerer Ausgangskanäle 3, 4, 5, 6.

Der zentrale Zugriff auf mehrere Schaltnetzteile 1 erlaubt zudem auf einfache Weise eine übereinstimmende Konfiguration dieser Schaltnetzteile 1. Beispielsweise werden via Web-Browser durch Eingabe eines Wertes für alle in einer Industrieanlage verbaute Schaltnetzteile 1 dieselben Stromgrenzwerte vorgegeben.

Zur weiteren Flexibilisierung der Einsatzmöglichkeiten ist es sinnvoll, für das Schaltnetzteil 1 diverse Erweiterungsmodule vorzusehen. Im einfachsten Fall ist das ein zusätzlicher Ausgangskanal, der dann über eine Schnittstelle zwischen Grundgerät und Erweiterungsmodul mittels der Steuerung 7 angesteuert ist.

Damit ist es möglich, auch ein solches Erweiterungsmodul über die Web-Schnittstelle 8 zu konfigurieren.

Die Erfindung umfasst auch ein Schaltnetzteil 1, das aus einem Grundgerät mit Bedienelementen und einem Web-Gerät aufgebaut ist. Das Web-Gerät umfasst dann ein eigenes Gehäuse mit dem Real-Time-Ethernet-Controller 9, der Web-Schnittstelle 8 und einer Schnittstelle zur Steuerung 7 des Grundgeräts. Bei angeschlossenem Web-Gerät ist das Grundgerät via Web-Browser konfigurier- und überwachbar. Das Schaltnetzteil 1 funktioniert jedoch auch bei abgetrenntem Web-Gerät, allerdings nur mit abgespeicherten Einstellwerten, die dann in einem manuellen Modus gegebenenfalls über die Bedienelemente des Grundgeräts veränderbar sind.

## Patentansprüche

1. Schaltnetzteil (1) mit mehreren Ausgangskanälen (3, 4, 5, 6) und einer Web-Schnittstelle (8) zur Anbindung an ein Kommunikationsnetzwerk (10), **dadurch gekennzeichnet, dass** das Schaltnetzteil (1) einen sogenannten Real-Time-Ethernet-Controller (9) umfasst, welcher mit einer Steuerung (7) des Schaltnetzteils (1) verbunden und als Web-Server eingerichtet ist, sodass über die Web-Schnittstelle (8) mehrere Betriebsparameter des Schaltnetzteils (1) in Echtzeit einstellbar und/oder anzeigbar sind.

2. Schaltnetzteil (1) nach Anspruch 1, **dadurch gekennzeichnet, dass** der Real-Time-Ethernet-Controller (9) zur Datenübertragung mit Taktsynchronität eingerichtet ist.

3. Schaltnetzteil (1) nach Anspruch 1 oder 2, **dadurch gekennzeichnet, dass** als Betriebsparameter zumindest eine Eingangsspannung (2) und ein Eingangsstrom anzeigbar und für jeden Ausgangskanal (3, 4, 5, 6) eine Ausgangsspannung und ein Stromlimit einstellbar und/oder anzeigbar sind.

4. Schaltnetzteil (1) nach Anspruch 3, **dadurch gekennzeichnet, dass** für jeden Ausgangskanal (3, 4, 5, 6) mittels Web-Server einstellbar ist, ob bei Erreichung des Stromlimits eine Abschaltung oder eine Strombegrenzung erfolgt.

5. Schaltnetzteil (1) nach einem der Ansprüche 1 bis 4, **dadurch gekennzeichnet, dass** mittels Web-Server für jeden Ausgangskanal (3, 4, 5, 6) eine Einschaltverzögerung einstellbar ist.

6. Schaltnetzteil (1) nach einem der Ansprüche 1 bis 5, **dadurch gekennzeichnet, dass** mittels Web-Server für jeden Ausgangskanal (3, 4, 5, 6) ein Betriebsstatus anzeigbar ist.

7. Schaltnetzteil (1) nach einem der Ansprüche 1 bis 6, **dadurch gekennzeichnet, dass** mittels Web-Server eine Geräteüberlast und/oder ein Phasenausfall anzeigbar sind/ist.

8. Schaltnetzteil (1) nach einem der Ansprüche 1 bis 7, **dadurch gekennzeichnet, dass** jeder Ausgangskanal (3, 4, 5, 6) mittels Web-Server separat aus- und einschaltbar ist.

9. Schaltnetzteil (1) nach einem der Ansprüche 1 bis 8, **dadurch gekennzeichnet, dass** jeder Ausgangskanal (3, 4, 5, 6) nach einer Überlastabschaltung mittels Web-Server wieder einschaltbar ist.

10. Schaltnetzteil (1) nach einem der Ansprüche 1 bis 9, **dadurch gekennzeichnet, dass** das Schaltnetzteil (1) ein Erweiterungsmodul umfasst und dass zumindest ein Parameter des Erweiterungsmoduls mittels Web-Server einstellbar und/oder anzeigbar ist.

11. Schaltnetzteil (1) nach Anspruch 10, **dadurch gekennzeichnet, dass** das Erweiterungsmodul ein Puffermodul zur Überbrückung einer Versorgungsunterbrechung ist und dass mittels Web-Server eine Pufferzeit einstellbar und/oder anzeigbar ist.

12. Schaltnetzteil (1) nach Anspruch 10 oder 11, **dadurch gekennzeichnet, dass** das Erweiterungsmodul einen zusätzlichen Ausgangskanal (3, 4, 5, 6) zur Versorgung einer weiteren Last umfasst.

13. Schaltnetzteil (1) nach einem der Ansprüche 1 bis 12, **dadurch gekennzeichnet, dass** mittels Web-Server eine in der Steuerung (7) des Schaltnetzteils eingerichtete Software änderbar ist.

14. Verfahren zum Betreiben eins Schaltnetzteils nach einem der Ansprüche 1 bis 13, **dadurch gekennzeichnet, dass** mittels Web-Server mehrere Betriebsparameter des Schaltnetzteils (1) in Echtzeit verändert werden und dass die veränderten Betriebsparameter mittels Web-Server angezeigt werden.
